(19) **Europäisches Patentamt**
**European Patent Office**
**Office européen des brevets**

(11) **EP 4 769 514 A1**

(12) **EUROPEAN PATENT APPLICATION**
published in accordance with Art. 153(4) EPC

(43) Date of publication:
01.07.2026 Bulletin 2026/27

(21) Application number: 24861560.1

(22) Date of filing: 24.05.2024

(51) International Patent Classification (IPC):
$H01M\ 4/131$ (2010.01)    $H01M\ 4/36$ (2006.01)
$H01M\ 10/0525$ (2010.01)

(52) Cooperative Patent Classification (CPC):
H01M 4/131; H01M 4/36; H01M 4/48; H01M 4/505;
H01M 4/525; H01M 4/58; H01M 10/052;
H01M 10/0525; Y02E 60/10

(86) International application number:
PCT/CN2024/095051

(87) International publication number:
WO 2025/050712 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.09.2023 CN 202311160440

(71) Applicant: Sunwoda Mobility Energy Technology
Co., Ltd.
Shenzhen, Guangdong 518107 (CN)

(72) Inventors:
• HE, Caiyun
Shenzhen, Guangdong 518107 (CN)
• OUYANG, Yunpeng
Shenzhen, Guangdong 518107 (CN)

(74) Representative: Metida
Gyneju str. 16
01109 Vilnius (LT)

(54) **SECONDARY BATTERY AND ELECTRIC DEVICE**

(57)    A secondary battery and an electrical apparatus. The secondary battery includes a positive electrode material, and satisfies: $I_{200}/I_1 \geq 0.62$, where $I_{200}$ represents an oxidation peak intensity of an H2-H3 phase transition of the positive electrode material in a dQ/dV graph of the secondary battery after 200 charge/discharge cycles at 1C at a constant temperature of 60°C, and $I_1$ represents an oxidation peak intensity of an H2-H3 phase transition of the positive electrode material in a dQ/dV graph of the secondary battery after a single charge/discharge cycle at 1C at a constant temperature of 60°C. After the secondary battery is subjected to 200 charge/discharge cycles at 1C at a constant temperature of 60°C, if a reversibility of the H2-H3 phase transition of the positive electrode material in a dQ/dV graph satisfies $I_{200}/I_1 \geq 0.62$, the positive electrode material has a stable cycling performance, thus the secondary battery has an excellent cycling stability.

FIG. 1

**Description**

**CROSS-REFERENCE TO RELATED APPLICATION**

The present disclosure claims the benefit of Chinese patent application No. 202311160440.9, filed on September 7, 2023, and titled "SECONDARY BATTERY AND ELECTRICAL APPARATUS", which is incorporated herein by reference in its entirety.

**TECHNICAL FIELD**

The present disclosure relates to the technical field of battery materials, and in particular to a secondary battery and an electrical apparatus.

**BACKGROUND**

During a charging process of a battery containing a high-nickel ternary positive electrode material, when a voltage is greater than 4.1V, an H2-H3 phase transition occurs, accompanied by a sudden contraction of a unit cell along the c-axis, resulting in a large volume change and microstress, which will induce an appearance of microcracks in subsequent cycles and make the cycle performance of the battery deteriorate. The capacity degradation of the battery containing a high-nickel ternary positive electrode material during a charge-discharge process is related to a gradual disappearance of the H3 phase. By achieving better reversibility of the H2-H3 phase transition, the lattice collapse can be effectively inhibited. The higher the degree of delithiation, the lower the reversibility of the H2-H3 phase transition during a charge-discharge process. The rapid deterioration of the cycle performance and the short lifespan of high-capacity power batteries are one of main bottlenecks in current mass production and commercialization.

**SUMMARY**

An objective of the present disclosure is to improve the cycle stability and energy density of a secondary battery.
Inventors of the present disclosure have found that after a secondary battery is subjected to 200 charge/-discharge cycles at 1C at a constant temperature of 60°C, if a reversibility of an H2-H3 phase transition of a positive electrode material in a dQ/dV graph satisfies a formula of $I_{200}/I_1 \geq 0.62$, the secondary battery will possess good cycling stability.
In one aspect, the present disclosure provides a secondary battery, where the secondary battery includes a positive electrode plate, the positive electrode plate includes a positive electrode material, and the secondary battery satisfies a formula as follows:

$$I_{200}/I_1 \geq 0.62,$$

where, $I_{200}$ represents an oxidation peak intensity of an H2-H3 phase transition of the positive electrode material in a dQ/dV graph of the secondary battery after 200 charge/discharge cycles at 1C at a constant temperature of 60°C, and $I_1$ represents an oxidation peak intensity of an H2-H3 phase transition of the positive electrode material in a dQ/dV graph of the secondary battery after a single charge/discharge cycle at 1C at a constant temperature of 60°C.
In some embodiments of the present disclosure, the positive electrode material includes a secondary particle, and the positive electrode material satisfies at least one of the following:

    a. $D_{v50}$ of the positive electrode material is in a range of from 5 $\mu$m to 18 $\mu$m;
    b. $D_{n10}$ of the positive electrode material is in a range of from 0.5 $\mu$m to 10 $\mu$m;
    c. BET specific surface area of the positive electrode material is in a range of from 0.1 $m^2/g$ to 1.0 $m^2/g$;

where, $D_{v50}$ is a particle size at which a cumulative volume distribution percentage of the positive electrode material reaches 50%, and $D_{n10}$ is a particle size at which a cumulative number distribution percentage of the positive electrode material reaches 10%.
In some embodiments of the present disclosure, the positive electrode material includes a single crystal particle or a single crystal-like particle, and the positive electrode material satisfies at least one of the following:

    a1. $D_{v50}$ of the positive electrode material is in a range of from 1 $\mu$m to 6 $\mu$m;
    b2. $D_{n10}$ of the positive electrode material is in a range of from 0.4 $\mu$m to 3 $\mu$m;

c3. BET specific surface area of the positive electrode material is in a range of from 0.5 $m^2$/g to 2.0 $m^2$/g;

where, $D_{v50}$ is a particle size at which a cumulative volume distribution percentage of the positive electrode material reaches 50%, and $D_{n10}$ is a particle size at which a cumulative number distribution percentage of the positive electrode material reaches 10%.

In some embodiments of the present disclosure, the positive electrode material includes a ternary material, the ternary material includes a compound of a chemical formula of $Li_xNi_yCo_zM_kMe_pO_rA_m$, where $0.95 \leq x \leq 1.05$, $0.5 \leq y \leq 1$, $0 \leq z \leq 1$, $0 \leq k \leq 1$, $0 \leq p \leq 0.1$, $1 \leq r \leq 2$, $0 \leq m \leq 2$, $m+r \leq 2$; M is selected from Mn and/or Al; Me is at least one selected from the group consisting of Zr, Zn, Ce, B, Mg, Mo, V, Ti, Sr, Sb, Y, W, Nb, La, Al, and Ba; A is at least one selected from the group consisting of N, F, S, and Cl.

In some embodiments of the present disclosure, a coating layer is arranged on a surface of the ternary material, and a coating element in the coating layer includes at least one selected from the group consisting of Zr, P, Ce, B, Mg, Mo, V, Ti, Sr, Sb, Y, W, Nb, La, Ba, and Co.

In some embodiments of the present disclosure, the coating layer includes a coating material, and the coating material includes at least one selected from the group consisting of an oxide, a hydroxide, an oxyhydroxide, a fluoride, or a salt of the coating element.

In some embodiments of the present disclosure, the coating material includes at least one selected from the group consisting of vanadium pentoxide, barium oxide, titanium dioxide, boron fluoride, magnesium fluoride, phosphorus pentafluoride, magnesium phosphate, barium phosphate, and lithium vanadium phosphate.

In some embodiments of the present disclosure, based on a mass of the positive electrode material, a mass content of the coating layer in the positive electrode material is in a range of from 100 ppm to 18,000 ppm.

In some embodiments of the present disclosure, for residual lithium on a surface of the positive electrode material, a mass content of $Li_2CO_3$ is <3,000 ppm and a mass content of LiOH is <5,000 ppm.

In another aspect, the present disclosure provides an electrical apparatus, including said secondary battery.

One of the embodiments of the present disclosure has the following advantages or beneficial effects.

In the present disclosure, a reversibility ($I_{200}/I_1$) of an H2-H3 phase transition of the positive electrode material in a dQ/dV graph of the secondary battery is determined under specific conditions. After the secondary battery is subjected to 200 charge/discharge cycles at 1C at a constant temperature of 60°C, the reversibility of the H2-H3 phase transition of the positive electrode material in the dQ/dV graph satisfying a formula of $I_{200}/I_1 \geq 0.62$, demonstrates that the positive electrode material has a stable cycling performance, thus a secondary battery made from the positive electrode material has an excellent cycling stability.

## BRIEF DESCRIPTION OF THE DRAWINGS

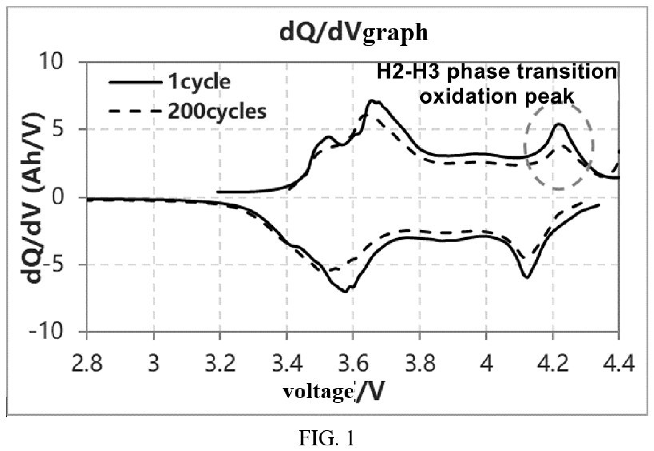

FIG. 1 is a graph showing differential capacity curves of the secondary battery according to Example 1 of the present disclosure, referred to as dQ/dV graph.

## DETAILED DESCRIPTION

In order to better illustrate objectives, technical solutions and advantages of the present disclosure, the present disclosure will be further described below in conjunction with specific embodiments and the drawings, but these embodiments are not intended to limit the present disclosure in any way.

In an embodiment of the present disclosure, provided herein is a secondary battery, where the secondary battery includes a positive electrode plate, the positive electrode plate includes a positive electrode material, and the secondary battery satisfies a formula as follows:

$$I_{200}/I_1 \geq 0.62,$$

where, $I_{200}$ represents an oxidation peak intensity of an H2-H3 phase transition of the positive electrode material in a dQ/dV graph of the secondary battery after 200 charge/discharge cycles at 1C at a constant temperature of 60°C, and $I_1$ represents an oxidation peak intensity of an H2-H3 phase transition of the positive electrode material in a dQ/dV graph of the secondary battery after a single charge/discharge cycle at 1C at a constant temperature of 60°C.

In the present disclosure, a reversibility ($I_{200}/I_1$) of the H2-H3 phase transition of the positive electrode material in the dQ/dV graph of the secondary battery is determined under specific conditions. After the secondary battery is subjected to 200 charge/discharge cycles at 1C at a constant temperature of 60°C, the reversibility of the H2-H3 phase transition of the positive electrode material in the dQ/dV graph satisfying a formula of $I_{200}/I_1 \geq 0.62$, demonstrates that the positive electrode material has a stable cycling performance, thus a secondary battery made from the positive electrode material has an excellent cycling stability.

In the present disclosure, a dQ/dV graph of the secondary battery can be obtained by testing in a test cabinet available from Shenzhen Neware electronics Co., Ltd., China. In the dQ/dV graph of the secondary battery, when a voltage is greater than 4.1V, a pair of oxidation/reduction peaks will appear, which correspond to an H2-H3 phase transition of the positive electrode material. During a charge/discharge process of the battery, an H3 phase of the positive electrode material will gradually disappear, thus an irreversibility of the H2-H3 phase transition will increase, resulting in the capacity degradation of the positive electrode material, the collapse of the lattice structure, and the deterioration of the cycle performance. If a ratio of the intensity of the oxidation/reduction peak of the H2-H3 phase transition of the positive electrode material after cycles to the intensity of the oxidation/reduction peak of the H2-H3 phase transition of the positive electrode material in an initial state (i.e., $I_{200}/I_1$) is within a certain range, it indicates that the reversibility of the H2-H3 phase transition of the positive electrode material is high during the charge/discharge process of the battery, and the lattice structure of the positive electrode material is more stable, thereby making the secondary battery have a longer cycle life.

In some embodiments of the present disclosure, $I_{200}/I_1 \leq 1.0$. In response to $I_{200}/I_1$ within this range, the reversibility of the H2-H3 phase transition of the positive electrode material during the charge /discharge process of the battery can be further improved, such that the secondary battery has a better comprehensive performance. In some embodiments of the present disclosure, a value of $I_{200}/I_1$ can be any one selected from the group consisting of 0.62, 0.68, 0.73, 0.79, 0.85, 0.91, 0.96, and 1.0, or a range between any two values therein.

In some embodiments of the present disclosure, $I_{200}/I_1 < 0.98$. In response to $I_{200}/I_1$ within this range, the lattice stability of the positive electrode material can be enhanced, which further improves the comprehensive performance of the secondary battery.

In some embodiments of the present disclosure, $0.77 \leq I_{200}/I_1 < 0.98$. In response to $I_{200}/I_1$ within this range, the irreversibility of the H2-H3 phase transition of the positive electrode material is reduced, which further improves the comprehensive performance of the secondary battery.

In some embodiments of the present disclosure, the positive electrode material includes a secondary particle.

In some embodiments of the present disclosure, $D_{v50}$ of the positive electrode material is in a range of from 5 $\mu$m to 18 $\mu$m; for example, it can be any one selected from the group consisting of 5 $\mu$m, 8 $\mu$m, 12 $\mu$m, 15 $\mu$m, and 18 $\mu$m, or a range between any two values therein. In response to the $D_{v50}$ of the positive electrode material within the above range, the positive electrode material can still have good adsorption and adhesion properties even within a relatively small yet appropriate specific surface area range. During formation of the positive electrode slurry by mixing, auxiliary materials can be used in a smaller amount to achieve a relatively strong adsorption between the positive electrode material with the binder, and the conductive agent, which is beneficial to improving the energy density of the battery.

In some embodiments of the present disclosure, $D_{n10}$ of the positive electrode material is in a range of from 0.5 $\mu$m to 10 $\mu$m; for example, it can be any one selected from the group consisting of 0.5 $\mu$m, 1.5 $\mu$m, 2.8 $\mu$m, 3.5 $\mu$m, 5 $\mu$m, 7 $\mu$m, 8 $\mu$m, and 10 $\mu$m, or a range between any two values therein. In response to the $D_{n10}$ of the positive electrode material within the above range, the positive electrode material has an appropriate specific surface area, which is conducive to the chemical performance of the battery.

In some embodiments of the present disclosure, BET specific surface area of the positive electrode material is in a range of from 0.1 m$^2$/g to 1.0 m$^2$/g, and can further be in a range of from 0.3 m$^2$/g to 0.7 m$^2$/g; for example, it can be any one selected from the group consisting of 0.1 m$^2$/g, 0.3 m$^2$/g, 0.5 m$^2$/g, 0.7 m$^2$/g, 0.9 m$^2$/g, and 1.0 m$^2$/g, or a range between any two values therein. In response to the BET specific surface area of the positive electrode material within the above appropriate range, a contact area between the electrolyte solution and the positive electrode material can be reduced, which is beneficial to inhibiting side reactions, preventing the electrolyte solution from corroding or damaging the crystal structure of the positive electrode material, which would lead to an accelerated decline in the cycle life of the assembled battery. Therefore, the cycle stability of the battery is further improved.

$D_{v50}$ is a particle size at which a cumulative volume distribution percentage of the positive electrode material reaches 50%, and $D_{n10}$ is a particle size at which a cumulative number distribution percentage of the positive electrode material reaches 10%.

In some embodiments of the present disclosure, the positive electrode material includes a single crystal particle or a single crystal-like particle.

In some embodiments of the present disclosure, in a case that the positive electrode material is a single crystal particle or a single crystal-like particle, the $D_{v50}$ of the positive electrode material is in a range of from 1 $\mu$m to 6 $\mu$m; for example, it can be any one selected from the group consisting of 1 $\mu$m, 3 $\mu$m, 5 $\mu$m, and 6 $\mu$m, or a range between any two values therein. In response to the $D_{v50}$ of the positive electrode material within the above range, the positive electrode material may have an appropriate specific surface area, thereby improving the electrochemical performance of the battery.

In some embodiments of the present disclosure, in a case that the positive electrode material is a single crystal particle or a single crystal-like particle, the $D_{n10}$ of the positive electrode material is in a range of from 0.4 $\mu$m to 3 $\mu$m; for example, it can be any one selected from the group consisting of 0.4 $\mu$m, 0.8 $\mu$m, 1.2 $\mu$m, 2.0 $\mu$m, 2.5 $\mu$m, and 3.0 $\mu$m, or a range between any two values therein. In response to the $D_{n10}$ of the positive electrode material within the above range, the positive electrode material may have an appropriate specific surface area, thereby improving the electrochemical performance of the battery.

In some embodiments of the present disclosure, in a case that the positive electrode material is a single crystal particle or a single crystal-like particle, the BET specific surface area of the positive electrode material is in a range of from 0.5 $m^2$/g to 2.0 $m^2$/g; for example, it can be any one selected from the group consisting of 0.5 $m^2$/g, 0.8 $m^2$/g, 1.2 $m^2$/g, 1.5 $m^2$/g, 1.8 $m^2$/g, and 2.0 $m^2$/g, or a range between any two values therein. In response to the BET specific surface area of the positive electrode material within the above range, the surficial and internal crystal structure of the positive electrode material are more complete, and the contact area with the electrolyte solution is smaller, which is beneficial to enhancing the crystal structure stability of the positive electrode material and further improving the cycle life of the battery.

$D_{v50}$ is a particle size at which a cumulative volume distribution percentage of the positive electrode material reaches 50%, and $D_{n10}$ is a particle size at which a cumulative number distribution percentage of the positive electrode material reaches 10%.

In some embodiments of the present disclosure, the positive electrode material includes a ternary material, and the ternary material includes a compound of a chemical formula of $Li_xNi_yCo_zM_kMe_pO_rA_m$, where $0.95 \leq x \leq 1.05$, $0.5 \leq y \leq 1$, $0 \leq z \leq 1$, $0 \leq k \leq 1$, $0 \leq p \leq 0.1$, $1 \leq r \leq 5$, $0 \leq m \leq 2$, $m+r \leq 2$; M is selected from Mn and/or Al; the Me is at least one selected from the group consisting of Zr, Zn, Ce, B, Mg, Mo, V, Ti, Sr, Sb, Y, W, Nb, La, Al, and Ba; A is at least one selected from the group consisting of N, F, S, and Cl.

In some embodiments of the present disclosure, Me is a doping element.

In some embodiments of the present disclosure, in the chemical formula of the ternary material, y may satisfy $0.60 \leq y \leq 0.95$, further satisfy $0.70 \leq y \leq 0.90$; and/or z may satisfy $0 \leq z \leq 0.15$, further satisfy $0.05 \leq z \leq 0.15$; and/or k may satisfy $0 \leq k \leq 0.2$, further satisfy $0.05 \leq k \leq 0.2$; and/or p may satisfy $0 \leq p \leq 0.03$, further satisfy $0 \leq p \leq 0.025$.

In some embodiments of the present disclosure, Me further can be at least one selected from the group consisting of Al, Ti, Zr, Sr, Ba, Mg, Nb, W, and Y. The doping element has electrochemical inertness. During the lithium ion intercalation/deintercalation process, a chemical valence state of the doping element changes a little. Meanwhile, the doping element can improve the reversibility of the H2-H3 phase transition of the positive electrode material during the charge/discharge process of the battery, so that the positive electrode material has a more stable crystal structure during the charge/discharge process, thereby improving the cycle performance of the positive electrode material. In the present disclosure, a mass content of the doping element in the positive electrode material can be in a range of from 200 ppm to 9,000 ppm.

In some embodiments of the present disclosure, a coating layer is provided on a surface of the ternary material, and a coating element in the coating layer includes at least one selected from the group consisting of Zr, P, Ce, B, Mg, Mo, V, Ti, Sr, Sb, Y, W, Nb, La, Ba, and Co. Based on a mass of the positive electrode material, a mass content of the coating layer in the positive electrode material is in a range of from 100 ppm to 18,000 ppm, and can further be in a range of from 300 ppm to 12,000 ppm.

In some embodiments of the present disclosure, the coating layer includes a coating material, and the coating material includes an oxide, a hydroxide, an oxyhydroxide, a fluoride, or a salt of the coating element. For example, the coating material includes at least one selected from the group consisting of vanadium pentoxide, barium oxide, titanium dioxide, boron fluoride, magnesium fluoride, phosphorus pentafluoride, magnesium phosphate, barium phosphate, and lithium vanadium phosphate.

By providing a coating layer on a surface of a positive electrode material, the surface of the positive electrode material can be effectively passivated, the positive electrode material can be isolated from the electrolyte solution, the amount of residual lithium on the surface of the positive electrode material can be reduced, and the reaction between the positive electrode material and the electrolyte solution can be prevented, thereby improving the cycle performance of the positive electrode material. This is because in an actual production process of the ternary material, the lithium salt used as a raw material may be impure and have a low melting point, and the lithium salt can undergo melting, decomposition and volatilization at a relatively low temperature. Therefore, an excess of lithium salt is added during the production of the ternary material to compensate lithium loss caused in the sintering process. Active oxygen anions on the surface of the ternary material will react with $CO_2$ and $H_2O$ in the air to form carbonate ions. Meanwhile, lithium ions will migrate from the bulk to the surface of the ternary material and form $Li_2CO_3$ on the surface. This process is accompanied by deoxidation of the surface of the ternary material, leading to the formation of a surface oxide layer with a distorted structure. In addition, in a practice of using excessive lithium salt in the production of ternary materials, high-temperature calcination of the excess lithium salt mainly produce Li oxides, which may react with $CO_2$ and $H_2O$ in the air to generate LiOH and $Li_2CO_3$ again, and LiOH and $Li_2CO_3$ will remain on the surface of the ternary material, thereby leading to a relatively high pH value of the ternary material. In addition, during the charge/discharge process, the $Li_2CO_3$ remaining on the surface of the ternary material will decompose to produce $CO_2$ gas. Since $CO_2$ gas will cause a pressure difference related with the temperature difference (especially in a case that the reaction process is accompanied by a thermal reaction), the swelling of the secondary battery will be aggravated, deteriorating the cycle performance of the secondary battery. Therefore, providing a coating layer on the surface of the positive electrode material can reduce the content of residual lithium (such as LiOH,

$Li_2CO_3$) on the surface of the positive electrode material to a certain extent, so as to achieve the purpose of improving the cycle performance of the lithium-ion battery. Furthermore, providing a coating layer on the surface of the positive electrode material can also reduce the probability of side reactions due to direct contact between the positive electrode material and the electrolyte solution, thereby reducing an amount of oxygen released from the positive electrode material for balancing the charge during the charge/discharge process, and an associated risk of crystal structure collapse can also be reduced.

In some embodiments of the present disclosure, for the residual lithium on the surface of the positive electrode material, a mass content of $Li_2CO_3$ is < 3,000 ppm and a mass content of LiOH is <5,000 ppm. The content of the residual lithium on the surface of the positive electrode material can be measured according to the general process of potentiometric titration in GB/T 9736-2008.

In the present disclosure, the above positive electrode material can be prepared by conventional methods in the art. For example, the positive electrode material is prepared by a method including the following steps:

S1. blending a nickel source, a cobalt source, a manganese source and/or an aluminum source to obtain a mixed salt solution, performing a coprecipitation reaction to obtain a positive electrode material precursor, where a pH range during the coprecipitation reaction is from 7.5 to 8.5;

S2. blending the positive electrode material precursor obtained in step S1, a lithium source, an optional Me source and/or an A source evenly to obtain a mixture, then placing the mixture in an atmosphere furnace for sintering at 800-900 °C for 10-15h, where an oxygen flow rate in the atmosphere furnace during the sintering in step S2 is 5 L/min to 30 L/min, to obtain a ternary material;

S3. blending the ternary material obtained in step S2 and a coating agent to obtain a mixture, then placing the mixture in an atmosphere furnace for sintering at 400-500 °C for 3-8 hours, where during the sintering in step S3, an oxygen flow rate in the atmosphere furnace is 20 L/min to 40 L/min, to obtain the positive electrode material.

The reversibility of the H2-H3 phase transition of the positive electrode material during the charge/discharge process of the secondary battery mainly depends on a process control related to oxygen bonding, including doping and coating elements of the positive electrode material, a precursor preparation process, and a powder sintering process. By matching the doping and coating elements, adjusting the pH in the precursor preparation process to improve the adhesion capacity of hydroxide ions, and controlling the sintering temperature, sintering time, and oxygen flow rates in the sintering processes, the reversibility of the H2-H3 phase transition of the positive electrode material in the dQ/dV graph after the secondary battery is subjected to 200 charge/discharge cycles at 1C at a constant temperature of 60°C can be controlled to be $0.62 \leq I_{200}/I_1$, which can ensure that the reversibility of the H2-H3 phase transition of the positive electrode material during the charge/discharge process of the battery is relatively high, thereby ensuring that the crystal structure of the positive electrode material is relatively intact and the structural stability is good, and the crystal is not easy to collapse during the process of lithium ion intercalation and deintercalation, which is beneficial to extending the cycle life of the battery and improving the energy density of the battery.

In some embodiments, a ratio of the oxygen flow rate in step S2 to the oxygen flow rate in step S3 is 1:(1.5-3). Suitable oxygen flow rates in the sintering processes can make the elemental doping and coating degree of the positive electrode material more excellent, and can make the positive electrode material lattice more stable. Controlling the ratio of oxygen flow rates within the above range is beneficial to the uniformity of elemental doping, and improving the lattice stability, and also conducive to the formation of a denser coating layer and a more complete conversion degree of the coating material, further improving the stability of the positive electrode material and improving the cycle performance of the secondary battery.

In some embodiments, the nickel source may be one or more selected from the group consisting of nickel sulfate, nickel nitrate, nickel chloride, nickel oxalate, and nickel acetate; the cobalt source may be one or more selected from the group consisting of cobalt sulfate, cobalt nitrate, cobalt chloride, cobalt oxalate, and cobalt acetate; the manganese source may be one or more selected from the group consisting of manganese sulfate, manganese nitrate, manganese chloride, manganese oxalate, and manganese acetate; the lithium source may be one or more selected from the group consisting of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), and lithium nitrate ($LiNO_3$); the Me source may be one or more selected from the group consisting of an oxide, a nitric acid compound, a carbonate compound, a hydroxide compound, and an acetate compound of the Me element; the A source may be selected according to actual needs, and for example, may be one or more selected from the group consisting of ammonium fluoride, lithium fluoride, hydrogen fluoride, ammonium chloride, lithium chloride, hydrogen chloride, ammonium bromide, lithium bromide, hydrogen bromide, ammonium iodide, lithium iodide, hydrogen iodide, hydrogen sulfide, lithium sulfide, and ammonium sulfide.

The secondary battery of the present disclosure includes a positive electrode plate, a negative electrode plate, a separator provided between the positive electrode plate and the negative electrode plate, and an electrolyte solution, where the positive electrode plate includes a positive electrode current collector and a positive electrode active material layer arranged on at least one surface of the positive electrode current collector, and the positive electrode active material layer includes the above positive electrode material.

The negative electrode plate includes a negative electrode current collector and a negative electrode active material layer arranged on at least one surface of the negative electrode current collector, where the negative electrode active material layer includes a negative electrode active material. The negative electrode active material can be various materials suitable for negative electrode active materials of lithium ion batteries in the art, for example, the negative electrode active material may include but is not limited to any one or a combination of two or more selected from the group consisting of graphite, soft carbon, hard carbon, carbon fiber, a mesophase carbon microsphere, a silicon-based material, a tin-based material, lithium titanate, and other metals that can form alloys with lithium. The graphite can be any one or a combination of two or more selected from the group consisting of artificial graphite, natural graphite, and modified graphite. The silicon-based material can be any one or a combination of two or more selected from the group consisting of elemental silicon, a silicon-oxygen compound, a silicon-carbon composite, and a silicon alloy. The tin-based material can be any one or a combination of two or more selected from the group consisting of elemental tin, a tin-oxygen compound, and a tin alloy. The type of the negative electrode current collector is also not specifically limited, and can be selected according to actual needs. For example, the negative electrode current collector can be a copper foil, a carbon-coated copper foil, or a polymer conductive film, and the negative electrode current collector is preferably a copper foil.

In the secondary battery of the present disclosure, the separator can be any material suitable for the separator of lithium-ion batteries in the art. For example, the separator can include but is not limited to any one or a combination of two or more selected from the group consisting of polyethylene, polypropylene, polyvinylidene fluoride, aramid, polyethylene terephthalate, polytetrafluoroethylene, polyacrylonitrile, polyimide, polyamide, polyester, and natural fibers.

In the secondary battery of the present disclosure, the electrolyte solution can be any electrolyte solution suitable for lithium-ion batteries in the art. For example, the electrolyte solution generally includes an electrolyte and a solvent. The electrolyte generally includes a lithium salt, etc. More specifically, the lithium salt can be an inorganic lithium salt and/or an organic lithium salt, etc., and can specifically include but is not limited to, any one or a combination of two or more selected from the group consisting of $LiPF_6$, $LiBF_4$, $LiN(SO_2F)_2$ (abbreviated as LiFSI), $LiN(CF_3SO_2)_2$ (abbreviated as LiTFSI), $LiClO_4$, $LiAsF_6$, $LiB(C_2O_4)_2$ (abbreviated as LiBOB), and $LiBF_2C_2O_4$ (abbreviated as LiDFOB). For another example, a concentration of the electrolyte may be between 0.8 mol/L and 1.5 mol/L. The solvent may be any solvent suitable for electrolyte solutions of lithium ion batteries in the art, and the solvent of the electrolyte solution is generally a non-aqueous solvent, preferably an organic solvent, and specifically may include but is not limited to any one or a combination of two or more selected from the group consisting of ethylene carbonate, propylene carbonate, butylene carbonate, pentylene carbonate, dimethyl carbonate, diethyl carbonate, dipropyl carbonate, and ethyl methyl carbonate, or halogenated derivatives thereof.

Methods for assembling the secondary battery are typically known to those skilled in the art. For example, a positive electrode plate, a separator and a negative electrode plate can each be individual layers, so that they can be cut into target sizes and stacked in sequence, and can further be wound to a target size to form a jelly roll, and the jelly roll can be further combined with an electrolyte solution to form a lithium secondary battery.

In some embodiments of the present disclosure, provided herein is an electrical apparatus including the secondary battery, where the secondary battery serves as a power source for the electrical apparatus.

The following examples are merely provided for facilitating understanding of the present disclosure. These examples are not intended to limit the scope of the present disclosure.

Example 1

A positive electrode material was provided in this example, which was prepared according to a method including the following steps:

S1. adding a nickel source (nickel sulfate), a cobalt source (cobalt sulfate), and a manganese source (manganese sulfate) into water in a molar ratio of Ni:Co:Mn of 8:1:1 to obtain a 1 mol/L mixed salt solution, adjusting a pH value of the mixed salt solution to 8.0 with 1 mol/L ammonia water, and performing a hydroxide coprecipitation reaction for 100 h, to obtain a positive electrode material precursor (nickel cobalt manganese hydroxide, $Ni_{0.80}Co_{0.10}Mn_{0.10}(OH)_2$);

S2. blending the positive electrode material precursor obtained in step S1, a lithium source ($LiOH \cdot H_2O$), and an optional Me source (alumina) evenly to obtain a mixture, then placing the mixture in an atmosphere furnace, with an oxygen flow rate of 18 L/min, performing a first sintering at 900°C for 12h, then cooling and grinding, to obtain a ternary material;

S3. evenly blending the ternary material obtained in step S2 with a coating agent (alumina) to obtain a mixture, then placing the mixture in the atmosphere furnace with an oxygen flow rate of 36 L/min, performing a second sintering at 450°C for 5 hours, then rushing and sieving, to obtain the positive electrode material (NCM811).

Examples 2 to 7

The preparation methods were the same as that in Example 1, except that types and contents of the Me source or the coating agent were changed.

Examples 8 to 10

The preparation methods were the same as that in Example 1, except that the ratios of the nickel source, the cobalt source and the manganese source were changed, and types and contents of the Me source or the coating agent were changed.

Examples 11 to 14

The preparation methods were the same as that in Example 1, except that crushing powers and the sieve mesh numbers of the positive electrode materials were changed to obtain positive electrode materials with different particle size distributions.

Examples 15 to 19

The preparation methods were the same as that in Example 1, except that pH values of the mixed solutions, the first sintering temperature and the second sintering temperature were changed to control the obtained positive electrode material to be secondary particles.

Examples 20 to 22

The preparation methods were the same as that in Example 1, except that pH values of the mixed solutions were changed.

Comparative Example 1

The preparation method was the same as that in Example 1, except that no Me source was added in step 2, and the type and content of the coating agent were changed.

Comparative Example 2

The preparation method was the same as that in Example 1, except that the type and content of the Me source were changed, and no coating agent was added in step 3.

Comparative Example 3

The preparation method was the same as that in Example 1, except that types and contents of the Me source and the coating agent were changed, and in step 3, the oxygen flow rate of the atmosphere furnace was 10 L/min.

The relevant parameters of the positive electrode materials of the examples (EX) and comparative examples (CE) were shown in Table 1.

In the present disclosure, particle sizes ($D_{v50}$, $D_{n10}$) of the primary particles of the positive electrode material were determined by a test method as follows: measuring the particle size distribution with a laser diffraction particle size distribution analyzer according to the laser diffraction method (specifically refer to GB/T19077-2016).

The specific surface area of the positive electrode material was measured using a specific surface area analyzer. The measurement is performed according to GB/T19587-2004, using a $N_2$ adsorption method.

The contents of the residual lithium ($Li_2CO_3$, LiOH) on the surface of the positive electrode material were measured by referring to the general process of the potentiometric titration method according to GB/T9736-2008.

Table 1 Parameters of positive electrode materials of Examples and Comparative Examples

| | Ternary positive electrode material | Me source | Content of Me element | Coating agent | Content of coating element | Particle morphology | $D_{v50}$ ($\mu$m) | $D_{n10}$ ($\mu$m) | BET specific surface area (m$^2$/g) | Li$_2$CO$_3$ (ppm) | LiOH (ppm) |
|---|---|---|---|---|---|---|---|---|---|---|---|
| EX 1 | NCM712 | Al$_2$O$_3$+ZrO$_2$ | 0.2wt%-0.2wt% | Al$_2$O$_3$ | 0.4wt% | single crystal particle | 3.78 | 0.93 | 1.08 | 2090 | 1020 |
| EX 2 | NCM712 | Al$_2$O$_3$+ZrO$_2$ | 0.3wt%+0.2wt% | Al$_2$O$_3$+TiO$_2$ | 0.2wt%+0.2wt% | single crystal particle | 3.75 | 0.96 | 0.87 | 1580 | 1100 |
| EX 3 | NCM712 | Al$_2$O$_3$+ZrO$_2$ | 0.3wt%+0.3wt% | Al$_2$O$_3$+TiO$_2$ | 0.2wt%+0.2wt% | single crystal particle | 3.81 | 0.98 | 1.19 | 1684 | 1051 |
| EX 4 | NCM712 | Al$_2$O$_3$+ZrO$_2$+WO$_3$ | 0.2wt%+0.2wt%+0.1wt% | Al$_2$O$_3$+TiO$_2$ | 0.2wt%+0.2wt% | single crystal particle | 3.79 | 0.88 | 1.08 | 1780 | 1190 |
| EX 5 | NCM712 | Al$_2$O$_3$+ZrO$_2$+SrCO$_3$ | 0.2wt%+0.2wt%+0.1wt% | Al$_2$O$_3$+B$_2$O$_3$ | 0.2wt%+0.4wt% | single crystal particle | 3.86 | 1.03 | 0.81 | 1084 | 2197 |
| EX 6 | NCM712 | Al$_2$O$_3$+ZrO$_2$+SrCO$_3$ | 0.2wt%+0.2wt%+0.1wt% | Al$_2$O$_3$+TiO$_2$+WO$_3$ | 0.2wt%+0.2wt%+0.1wt% | single crystal particle | 3.76 | 1.12 | 1.01 | 1984 | 1197 |
| EX 7 | NCM712 | Al$_2$O$_3$+ZrO$_2$+SrCO$_3$+ Y$_2$O$_3$ | 0.2wt%+0.2wt%+0.1wt%+0.1wt% | Al$_2$O$_3$+TiO$_2$+WO$_3$ | 0.2wt%+0.2wt%+0.1wt% | single crystal particle | 3.69 | 1.03 | 1.05 | 1590 | 1320 |
| EX 8 | NCM811 | Al$_2$O$_3$+ZrO$_2$ | 0.2wt%0.2wt% | Al$_2$O$_3$ | 0.4wt% | single crystal particle | 3.56 | 0.88 | 0.94 | 1520 | 3030 |
| EX 9 | NCM811 | Al$_2$O$_3$+ZrO$_2$+SrCO$_3$ | 0.2wt%+0.2wt%+0.1wt% | Al$_2$O$_3$ | 0.4wt% | single crystal particle | 3.53 | 0.95 | 0.96 | 1450 | 3170 |
| EX 10 | NCM811 | Al$_2$O$_3$+ZrO$_2$+SrCO$_3$ | 0.2wt%+0.2wt%+0.1wt% | Al$_2$O$_3$+B$_2$O$_3$ | 0.2wt%+0.4wt% | single crystal particle | 3.49 | 1.06 | 0.98 | 1640 | 3120 |
| EX 11 | NCM712 | Al$_2$O$_3$+ZrO$_2$ | 0.3w1%+0.2wt% | Al$_2$O$_3$+TiO$_2$ | 0.2wt%+0.2wt% | single crystal particle | 3.3 | 0.81 | 1.13 | 1780 | 1680 |
| EX 12 | NCM712 | Al$_2$O$_3$+ZrO$_2$ | 0.3wt%+0.2wt% | Al$_2$O$_3$+TiO$_2$ | 0.2wt%+0.2wt% | single crystal particle | 5.02 | 1.13 | 0.94 | 2020 | 1760 |
| EX 13 | NCM712 | Al$_2$O$_3$+ZrO$_2$ | 0.3wt%+0.2wt% | Al$_2$O$_3$+TiO$_2$ | 0.2wt%+0.2wt% | single crystal particle | 3.77 | 0.41 | 1.34 | 2300 | 1452 |

(continued)

| | Ternary positive electrode material | Me source | Content of Me element | Coating agent | Content of coating element | Particle morphology | $D_{v50}$ (μm) | $D_{n10}$ (μm) | BET specific surface area (m²/g) | $Li_2CO_3$ (ppm) | LiOH (ppm) |
|---|---|---|---|---|---|---|---|---|---|---|---|
| EX 14 | NCM712 | $Al_2O_3+ZrO_2$ | 0.3wt%4.2wt% | $Al_2O_3+TiO_2$ | 0.2wt%+0.2wt% | single crystal particle | 3.82 | 1.68 | 0.85 | 1760 | 1425 |
| EX 15 | NCM811 | $Al_2O_3+ZrO_2+SrCO_3$ | 0.2wt%+0.2wt%+0.1wt% | $Al_2O_3+B_2O_3$ | 0.2wt%+0.4wt% | secondary particle | 8.06 | 5.1 | 0.70 | 1520 | 3860 |
| EX 16 | NCM811 | $Al_2O_3+ZrO_2+SrCO_3$ | 0.2wt%+0.2wt%+0.1wt% | $Al_2O_3+B_2O_3$ | 0.2wt%+0.4wt% | secondary particle | 10.96 | 6.10 | 0.65 | 1240 | 3270 |
| EX 17 | NCM811 | $Al_2O_3+ZrO_2+SrCO_3$ | 0.2wt%+0.2wt%+0.1wt% | $Al_2O_3+B_2O_3$ | 0.2wt%+0.4wt% | secondary particle | 14.93 | 6.76 | 0.58 | 1310 | 3030 |
| EX 18 | NCM811 | $Al_2O_3+ZrO_2+SrCO_3$ | 0.2wt%+0.2wt%+0.1wt% | $Al_2O_3+B_2O_3$ | 0.2wt%+0.4wt% | secondary particle | 10.86 | 4.5 | 0.72 | 1564 | 3725 |
| EX 19 | NCM811 | $Al_2O_3+ZrO_2+SrCO_3$ | 0.2wt%+0.2wt%+0.1wt% | $Al_2O_3+B_2O_3$ | 0.2wt%+0.4wt% | secondary particle | 10.93 | 8.96 | 0.52 | 1320 | 3580 |
| EX 20 | NCM712 | $Al_2O_3+ZrO_2$ | 0.2wt%+0.2wt% | $BF_3$ | 0.4wt% | single crystal particle | 3.78 | 0.93 | 1.08 | 2090 | 1020 |
| EX21 | NCM712 | $Al_2O_3+ZrO_2$ | 0.2wt%+0.2wt% | $MgF_2$ | 0.7wt% | single crystal particle | 3.95 | 1.25 | 1.14 | 1658 | 1265 |
| EX 22 | NCM712 | $Al_2O_3+ZrO_2$ | 0.2wt%+4.2wt% | $BaPO_4$ | 0.9 wt% | single crystal particle | 3.46 | 0.86 | 1.12 | 1689 | 1485 |
| CE 1 | NCM712 | / | / | $Al_2O_3+TiO_2$ | 0.2wt%+0.2wt% | single crystal particle | 3.75 | 0.98 | 1.08 | 1450 | 1420 |
| CE 2 | NCM712 | ZrO | 0.2wt% | / | / | single crystal particle | 3.72 | 1.02 | 0.93 | 1320 | 1820 |
| CE 3 | NCM712 | $Al_2O_3+ZrO_2$ | 0.1wt%+0.1wt% | $Al_2O_3$ | 0.2wt% | single crystal particle | 3.79 | 1.09 | 0.88 | 1570 | 1330 |

Note: Content of Me element and content of coating element are based on the mass of the positive electrode material.

The secondary batteries including the positive electrode materials prepared in the above examples and comparative examples were tested for performances thereof. The preparation process, test method and results of the batteries were as follows:

Preparation of a positive electrode plate

Each of the positive electrode materials prepared in the above examples and comparative examples, a binder (polyvinylidene fluoride), and a conductive agent (acetylene black) were blended in a mass ratio of 96:3:1, N-methylpyrrolidone (NMP) was added, then a resulting mixture was stirred evenly in a vacuum mixer to obtain a positive electrode slurry; the positive electrode slurry was evenly coated on two surfaces of an aluminum foil with a thickness of 16 $\mu$m; then the aluminum foil coated with the positive electrode slurry was subjected to drying in an oven at 100°C to 130°C, cold pressing, and cutting, to obtain the positive electrode plate.

Preparation of a negative electrode plate

The negative electrode active material (graphite), a thickener (sodium carboxymethyl cellulose), a binder (styrene butadiene rubber), and a conductive agent (acetylene black) were blended in a mass ratio of 95.7:0.8:2.5:1, deionized water was added and a resulting mixture was stirred in a vacuum mixer to obtain a negative electrode slurry; the negative electrode slurry was evenly coated on two surfaces of a copper foil with a thickness of 8 $\mu$m; the coated copper foil was subjected to drying in an oven at 70°C to 100°C, cold pressing, and cutting to obtain the negative electrode plate.

Assembly of a secondary battery

The positive electrode plate, a separator (a polypropylene separator with a thickness of 12 $\mu$m), and the negative electrode plate were stacked in order, so that the separator was positioned between the positive electrode plate and the negative electrode plate to play a separation role, then a stacked structure was wound into a square jelly roll, the jelly roll was loaded with an aluminum-plastic film, then baked at 85°C to remove water, and then a non-aqueous electrolyte solution (the electrolyte solution was a $LiPF_6$ solution with a concentration of 1 mol/L, and the solvent was a mixture of ethylene carbonate (EC), ethyl methyl carbonate (EMC) and diethyl carbonate (DEC) in a volume ratio of 30:30:40) was injected, the cell was sealed, and after standing, hot-cold pressing, formation, clamping, capacity grading and other processes, the secondary battery was obtained.

The secondary batteries were tested for cycle lives and discharge capacities according to the following methods:

1. Cycle performance: under a constant temperature of 45°C, in a voltage range of 2.8-4.2V (for Examples 8-10 and Examples 15-19) or 2.8-4.4V (for Examples 1-7, Examples 11-14, Examples 20-22 and Comparative Examples 1-3), the secondary batteries were charged to 4.2V or 4.4V at 1C, then charged at a constant voltage of 4.2V or 4.4V until a current was ≤0.05 C, rested for 10 min, and then discharged to a voltage of 2.8V at 1C, and after resting for 10 min, the capacities were recorded as $D_n$ (n=0, 1, 2...); the previous process was repeated until the capacity faded to 80% of the initial capacity ($D_0$), and at this time, the number of cycles of the secondary battery was recorded.

2. Discharge capacity (mAh/g): under a constant temperature of 25°C, in a voltage range of 2.8-4.2V (for Examples 8-10 and 15-19) or 2.8-4.4V (for Examples 1-7, Examples 11-14, Examples 20-21 and Comparative Examples 1-3), the secondary batteries were charged to 4.2V or 4.4V at 1/3C, then charged at a constant voltage of 4.2V or 4.4V until a current was ≤0.05C, rested for 5 minutes, and then discharged to 2.8V at 1/3C, and capacities of the batteries were recorded (with a unit of mAh/g).

3. $I_{200}/I_1$ measurement: at a constant temperature of 60°C, in a voltage range of 2.8-4.4V, the secondary batteries were charged to 4.4V at 1C, then charged at a constant voltage of 4.4V until a current was ≤0.05C, rested for 10 minutes, then discharged to 2.8V at 1C, and rested for 10 minutes; the previous process was repeated until 200 cycles were completed, then the recorded charge/discharge parameter, i.e., capacities and voltage data, were processed as follows: the voltage and capacity values of the $n^{th}$ data point were subtracted from the voltage and power values of the $n+1^{th}$ data point to obtain dV and dQ values, and the above calculation was performed on all the data points in turn, to obtain a series of dV and dQ values. Then a standard dQ/dV graph was generated by taking dQ/dV as the vertical axis and voltage as the horizontal axis. The oxidation peak intensity of the H2-H3 phase transition in the dQ/dV graph of the secondary battery after 1 cycle was recorded as $I_1$, and the oxidation peak intensity of the H2-H3 phase transition in the dQ/dV graph of the secondary battery after 200 cycles was recorded as $I_{200}$. Then $I_{200}/I_1$ was calculated, and the test results were shown in Table 2.

The test results were shown in Table 2.

Table 2 Performance test results of secondary batteries of examples and comparative examples

| | $I_{200}/I_1$ | Number of cycles conducted at 45°C until the capacity is 80% of the initial capacity (circles) | Capacity (mAh/g) |
|---|---|---|---|
| EX 1 | 0.77 | 950 | 203 |
| EX 2 | 0.81 | 1010 | 202.5 |
| EX 3 | 0.86 | 1140 | 202 |
| EX 4 | 0.91 | 1250 | 203 |
| EX 5 | 0.90 | 1200 | 204 |
| EX 6 | 0.92 | 1330 | 203 |
| EX 7 | 0.95 | 1230 | 202.5 |
| EX 8 | 0.72 | 840 | 206 |
| EX 9 | 0.83 | 1070 | 206.5 |
| EX 10 | 0.89 | 1200 | 206.5 |
| EX 11 | 0.78 | 980 | 202.5 |
| EX 12 | 0.75 | 910 | 202 |
| EX 13 | 0.73 | 870 | 203 |
| EX 14 | 0.87 | 1150 | 201 |
| EX 15 | 0.76 | 940 | 204.5 |
| EX 16 | 0.72 | 850 | 206 |
| EX 17 | 0.63 | 760 | 205 |
| EX 18 | 0.69 | 780 | 204.5 |
| EX 19 | 0.81 | 1030 | 205.5 |
| EX 20 | 0.96 | 1120 | 204.8 |
| EX 21 | 0.98 | 960 | 201 |
| EX 22 | 1.0 | 880 | 202 |
| CE 1 | 0.58 | 660 | 203 |
| CE 2 | 0.59 | 690 | 203 |
| CE 3 | 0.61 | 710 | 203 |

As can be seen from the above results, when a reversibility of the H2-H3 phase transition of the positive electrode material in the dQ/dV graph of the secondary battery after 200 charge/discharge cycles at 1C satisfies a formula of $I_{200}/I_1 \geq 0.62$, the secondary battery has an excellent cycle life. In addition, as can be seen from the data of Examples 20 to 22, a too large value of $I_{200}/I_1$ is not preferred. When a value of $I_{200}/I_1$ is 1, the cycle performance of the secondary battery drops to 880 cycles.

The above steps are only provided to help understand the methods, structures and core idea of the present disclosure. For ordinary technicians in this technical field, without departing from the principle of the present disclosure, several improvements and modifications may be made to the present disclosure, and these improvements and modifications also fall within the protection scope of the present disclosure.

**Claims**

1. A secondary battery, wherein the secondary battery comprises a positive electrode plate, the positive electrode plate comprises a positive electrode material, and the secondary battery satisfies a formula as follows:

$$I_{200}/I_1 \geq 0.62,$$

wherein, $I_{200}$ represents an oxidation peak intensity of an H2-H3 phase transition of the positive electrode material in a dQ/dV graph of the secondary battery after 200 charge/discharge cycles at 1C at a constant temperature of 60°C, and
$I_1$ represents an oxidation peak intensity of an H2-H3 phase transition of the positive electrode material in a dQ/dV graph of the secondary battery after a single charge/discharge cycle at 1C at a constant temperature of 60°C.

2. The secondary battery according to claim 1, wherein the positive electrode material comprises a secondary particle, and the positive electrode material satisfies at least one of the following:

   a. $D_{v50}$ of the positive electrode material is in a range of from 5 $\mu$m to 18 $\mu$m;
   b. $D_{n10}$ of the positive electrode material is in a range of from 0.5 $\mu$m to 10 $\mu$m;
   c. BET specific surface area of the positive electrode material is in a range of from 0.1 m$^2$/g to 1.0 m$^2$/g;

   wherein, $D_{v50}$ is a particle size at which a cumulative volume distribution percentage of the positive electrode material reaches 50%, and $D_{n10}$ is a particle size at which a cumulative number distribution percentage of the positive electrode material reaches 10%.

3. The secondary battery according to claim 1, wherein the positive electrode material comprises a single crystal particle or a single crystal-like particle, and the positive electrode material satisfies at least one of the following:

   al. $D_{v50}$ of the positive electrode material is in a range of from 1 $\mu$m to 6 $\mu$m;
   b2. $D_{n10}$ of the positive electrode material is in a range of from 0.4 $\mu$m to 3 $\mu$m;
   c3. BET specific surface area of the positive electrode material is in a range of from 0.5 m$^2$/g to 2.0 m$^2$/g;
   wherein, $D_{v50}$ is a particle size at which a cumulative volume distribution percentage of the positive electrode material reaches 50%, and $D_{n10}$ is a particle size at which a cumulative number distribution percentage of the positive electrode material reaches 10%.

4. The secondary battery according to claim 1, wherein the positive electrode material comprises a ternary material, the ternary material comprises a compound of a chemical formula of $Li_xNi_yCo_zM_kMe_pO_rA_m$, wherein $0.95 \leq x \leq 1.05$, $0.5 \leq y \leq 1$, $0 \leq z \leq 1$, $0 \leq k \leq 1$, $0 \leq p \leq 0.1$, $1 \leq r \leq 2$, $0 \leq m \leq 2$, $m+r \leq 2$; M is selected from Mn and/or Al; Me is at least one selected from the group consisting of Zr, Zn, Ce, B, Mg, Mo, V, Ti, Sr, Sb, Y, W, Nb, La, Al, and Ba; A is at least one selected from the group consisting of N, F, S, and Cl.

5. The secondary battery according to claim 4, wherein a coating layer is arranged on a surface of the ternary material, and a coating element in the coating layer comprises at least one selected from the group consisting of Zr, P, Ce, B, Mg, Mo, V, Ti, Sr, Sb, Y, W, Nb, La, Ba, and Co.

6. The secondary battery according to claim 5, wherein the coating layer comprises a coating material, and the coating material comprises at least one selected from the group consisting of an oxide, a hydroxide, an oxyhydroxide, a fluoride, or a salt of the coating element.

7. The secondary battery according to claim 5, wherein based on a mass of the positive electrode material, a mass content of the coating layer in the positive electrode material is in a range of from 100 ppm to 18,000 ppm.

8. The secondary battery according to claim 1, wherein for residual lithium on a surface of the positive electrode material, a mass content of $Li_2CO_3$ is <3,000 ppm and a mass content of LiOH is <5,000 ppm.

9. The secondary battery according to claim 6, wherein the coating material comprises at least one selected from the group consisting of vanadium pentoxide, barium oxide, titanium dioxide, boron fluoride, magnesium fluoride, phosphorus pentafluoride, magnesium phosphate, barium phosphate, and lithium vanadium phosphate.

10. An electrical apparatus, comprising the secondary battery according to any one of claims 1 to 9.

FIG. 1

## INTERNATIONAL SEARCH REPORT

| International application No. |
| --- |
| **PCT/CN2024/095051** |

### A. CLASSIFICATION OF SUBJECT MATTER

H01M4/131(2010.01)i; H01M4/36(2006.01)i; H01M10/0525(2010.01)i

According to International Patent Classification (IPC) or to both national classification and IPC

### B. FIELDS SEARCHED

Minimum documentation searched (classification system followed by classification symbols)

IPC: H01M4/-; H01M10/-

Documentation searched other than minimum documentation to the extent that such documents are included in the fields searched

Electronic data base consulted during the international search (name of data base and, where practicable, search terms used)

CNTXT, CNKI, ENTXT, VCN, DWPI: 循环, 相变, 可逆, 峰, 强度, 圈, 包覆材料, 包覆剂, 包覆层, 欣旺达电动汽车电池有限公司, li?ion batter+, H2, H3, cycling, coating material?, coating agent?, coating layer

### C. DOCUMENTS CONSIDERED TO BE RELEVANT

| Category* | Citation of document, with indication, where appropriate, of the relevant passages | Relevant to claim No. |
| --- | --- | --- |
| PX | CN 117239059 A (SUNWODA POWER TECHNOLOGY CO., LTD.) 15 December 2023 (2023-12-15) description, embodiment 1 | 1-10 |
| X | CN 115995531 A (SUNWODA ELECTRIC VEHICLE BATTERY CO., LTD.) 21 April 2023 (2023-04-21) description, paragraphs 13-27, and embodiment 11 | 1-10 |
| A | CN 115472775 A (SUNWODA ELECTRIC VEHICLE BATTERY CO., LTD.) 13 December 2022 (2022-12-13) description, embodiment 1 | 1-10 |
| A | CN 112436115 A (NINGDE CONTEMPORARY AMPEREX TECHNOLOGY CO., LTD.) 02 March 2021 (2021-03-02) description, embodiment 9 | 1-10 |
| A | CN 116207249 A (NINGBO RONBAY NEW ENERGY TECHNOLOGY CO., LTD.) 02 June 2023 (2023-06-02) description, embodiment 1 | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 August 2024** | **21 August 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/095051** |

**C. DOCUMENTS CONSIDERED TO BE RELEVANT**

| Category* | Citation of document, with indication, where appropriate, of the relevant passages | Relevant to claim No. |
|---|---|---|
| A | US 2022271283 A1 (BATTERY SOLUTION) 25 August 2022 (2022-08-25)<br>entire document | 1-10 |

Form PCT/ISA/210 (second sheet) (July 2022)

**INTERNATIONAL SEARCH REPORT**
Information on patent family members

International application No.

**PCT/CN2024/095051**

| Patent document cited in search report | | | Publication date (day/month/year) | Patent family member(s) | | | Publication date (day/month/year) |
|---|---|---|---|---|---|---|---|
| CN | 117239059 | A | 15 December 2023 | None | | | |
| CN | 115995531 | A | 21 April 2023 | None | | | |
| CN | 115472775 | A | 13 December 2022 | None | | | |
| CN | 112436115 | A | 02 March 2021 | CN | 112436115 | B | 28 December 2021 |
| CN | 116207249 | A | 02 June 2023 | None | | | |
| US | 2022271283 | A1 | 25 August 2022 | WO | 2021006520 | A1 | 14 January 2021 |
| | | | | EP | 3989316 | A1 | 27 April 2022 |
| | | | | EP | 3989316 | A4 | 09 August 2023 |

Form PCT/ISA/210 (patent family annex) (July 2022)

**EP 4 769 514 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311160440